# EUROPEAN PATENT APPLICATION

(11) **EP 2 019 531 A1**
(43) Date of publication of application: **28.01.2009**
(21) Application number: 07425476.4
(22) Date of filing: 27.07.2007
(51) Int. Cl.: H04L 29/06

(54) **Signaling mechanism for allowing asn to become aware of cmipv6 mobility binding status**

(71) Applicant: Nokia Siemens Networks S.p.A., 20126 Milano (IT)
(72) Inventor: Marzi, Andrea, 24121 Bergamo (IT)

(57) **Abstract**

The invention proposes, in the context of WiMAX networks supporting the CMlPv6 functionality, a new method for allowing the ASN-GW to become aware of the status of a control procedure, the CMIPv6 mobility binding procedure.

The ASN-GW is not directly aware of its result since the procedure implies a message exchange at U-Plane level, at which the ASN-GW implement only routing functionality. Nevertheless the ASN-GW needs to know the status of it since it has to perform some following actions depending on its status.

Currently this problem is overcome by ASN-GW packet inspection at User level, with some impacts on capacity resources. With this invention we are proposing to use a newly defined signalling mechanism between ASN and CSN (please refer to figure 5).

## Description

The invention applies to WiMAX networks, in particular to networks supporting CMIPv6. CMIPv6 has being introduced as part of the Release 1.0 of the WiMAX Forum specification. In CMIPv6 R3 mobility binding is between MS and HA and it is handled via messages on U-Plane level. Then only MS and HA are aware of BU/BA status and the problem is how the ASN becomes aware of the CMIPv6 binding state.

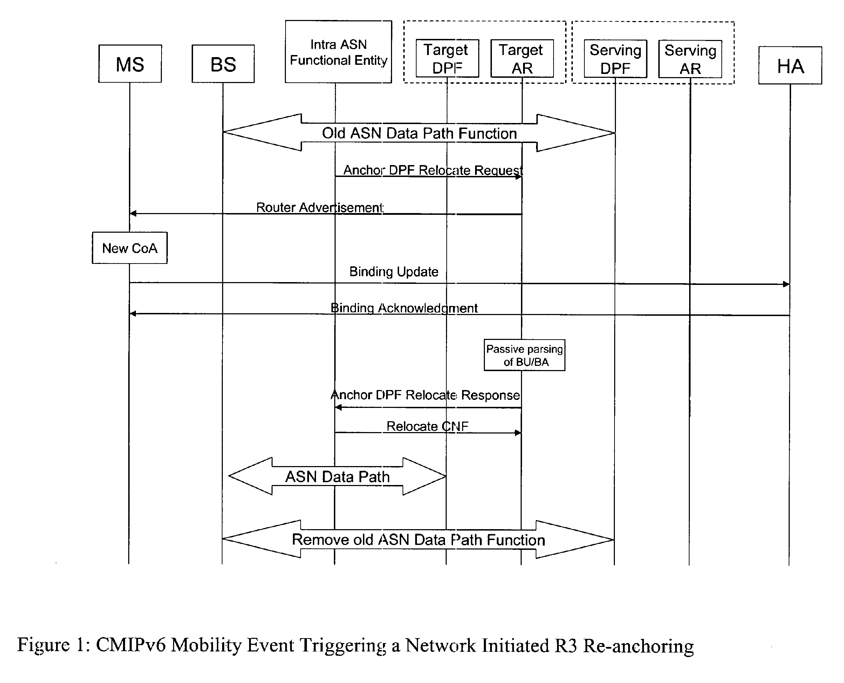

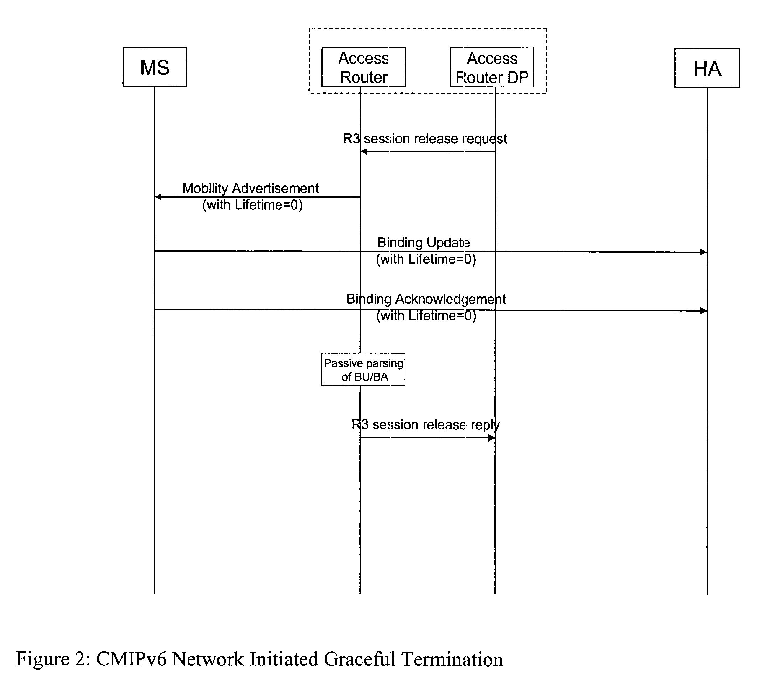

At present, in WiMAX networks supporting CMIPv6, the only possible way to solve this problem is ASN-GW packet inspection: ASN-GW does not know if the MS actually sent BU and if the BA has indicated success, unless it performs packet inspection in the U-Plane. Then, in the currently adopted WiMAX solution, ASN-GW has to passively parse each U-Plane message to gain awareness of the status of BU/BA, both during Network Initiated R3 Re-Anchoring and Network Initiated Graceful Termination (refer to figures 1 and 2, which show the procedures as reported in [1] and [2]). Note that ASN-GW has to know this binding status for several reasons, for example in order to start the release of the R4 tunnel between Serving and Target ASN-GWs.

The invention proposes a new method for allowing the ASN-GW to become aware of BU/BA status, making use of signaling mechanisms between ASN and CSN. One of the advantages is that these new signaling mechanisms allow the ASN-GW to avoid parsing each U-Plane message, then saving a lot of capacity resources.

According to the invention introduced in this contribution, different signaling flows could be used to solve the problem. Basically the idea at the basis of this document is to allow the CSN to send specific signaling messages to ASN-GW, informing it of the success of the mobility binding procedure.

One of the most efficient methods that could be used is the one in which the status of BU/BA exchange is realized in a circle way: HA informs the AAA, AAA informs the ASN-GW authenticator, ASN-GW authenticator informs the new anchor ASN-GW DPF and the new anchor ASN-GW DPF informs the old anchor ASN-GW DPF. So in this case the problem is basically solved by signalling the status of BU/BA to ASN-GW authenticator through AAA.

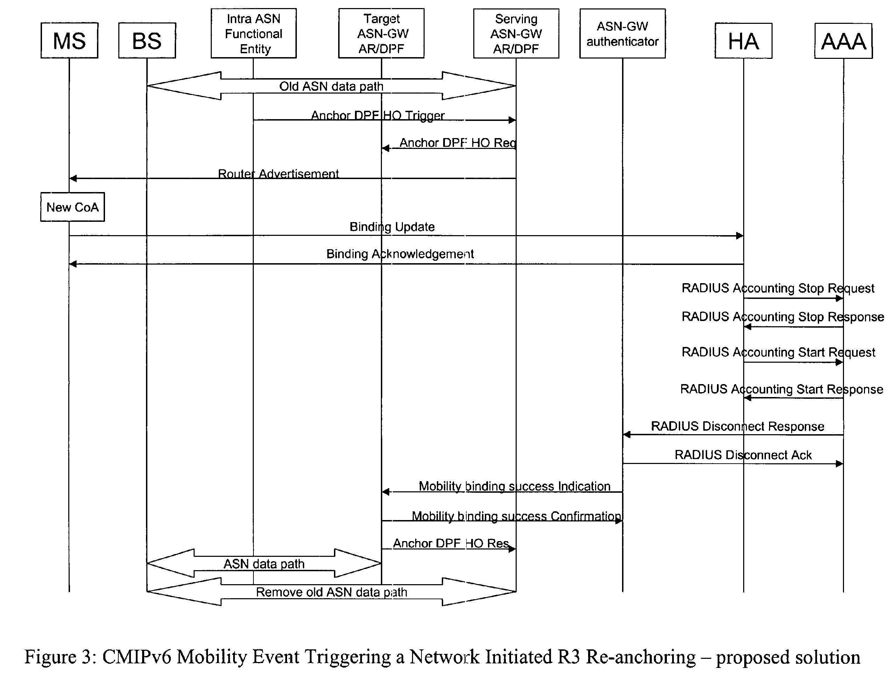

With this approach in case of Network Initiated R3 Re-Anchoring (see figure 3), once a new binding with HA is created (after a successful exchange of BU/BA messages), the Accounting Client in the HA shall send Accounting Request Stop/Start messages to the AAA (due to the modification of the ongoing mobility binding). After the response towards HA, AAA will send a RADIUS Disconnect Request message to the Authenticator GW asking for releasing all the needed resources.

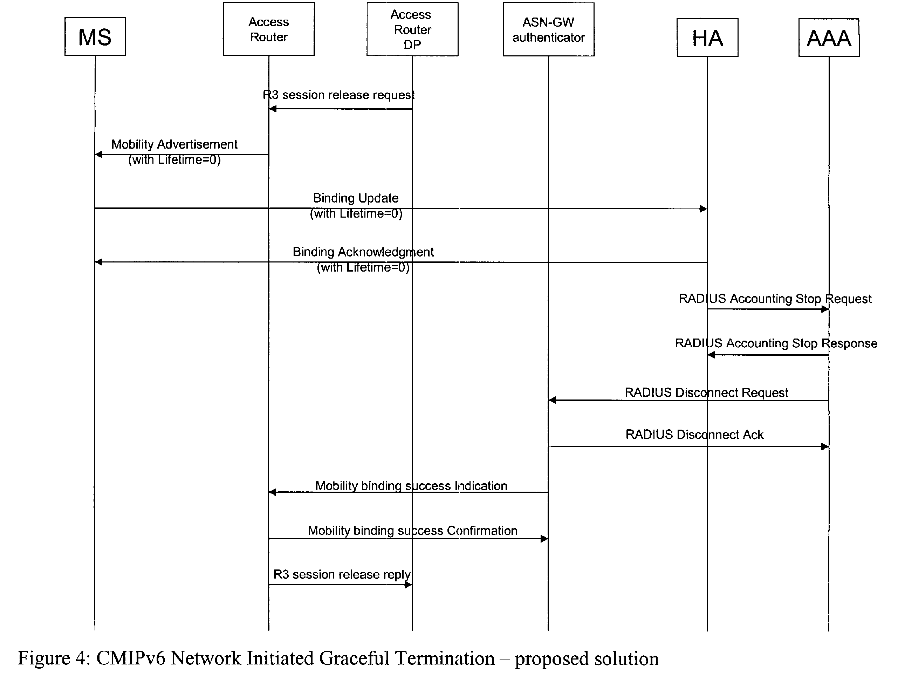

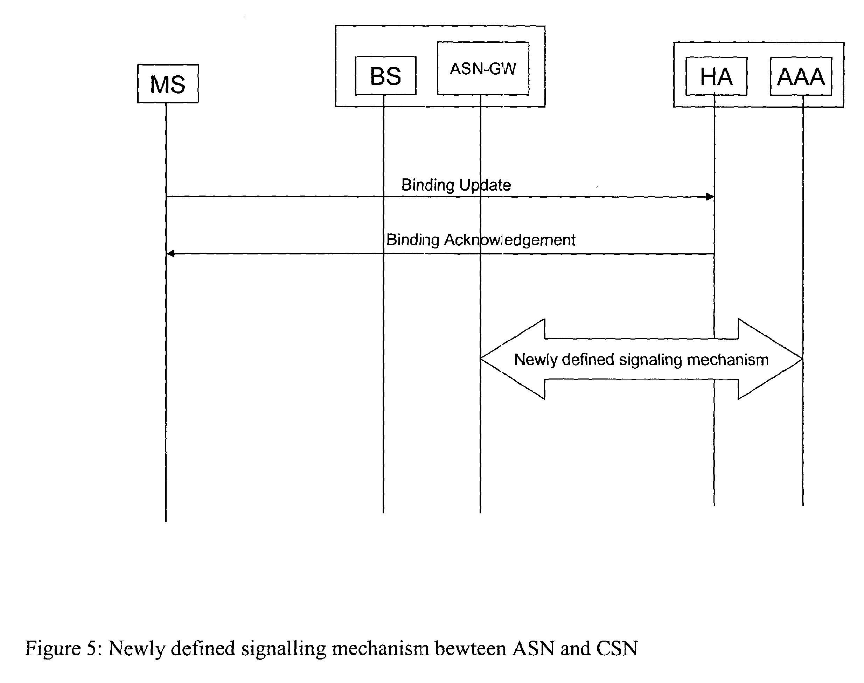

Similarly, in case of CMIPv6 Network Initiated Graceful Termination (see figure 4), the MS sends a binding update with lifetime=0 to HA. Upon the successful deletion of mobility binding with the MS, the Accounting Client in HA shall send an Accounting Request Stop message to the AAA. After the response towards HA, AAA will send a RADIUS Disconnect Request message to the Authenticator GW asking for releasing all the needed resources.

Note that this solution could work even if the HA does not really do accounting, since the functionality of accounting inside HA is an optional feature also in case of IPv6 support (HA could send just the STOP message as a trigger with AAA-Session-ID and some appropriate Acct-Terminate-Cause value).

Note also that this RADIUS disconnect feature would use the existing format of RADIUS disconnect request and response messages. The code field used in disconnect messages would have three different codes: Disconnect-Request (40), Disconnect-ACK (41), Disconnect-NAK (42). For differentiating between the two different use cases reported above (R3 re-anchoring and graceful network exit) we could ask to introduce new RADIUS VSAs, to be used in the RADIUS Disconnect messages sent to the authenticator. Each RADIUS Client is already able to receive and to process unsolicited disconnect requests from RADIUS servers: the disconnect response will be either a Disconnect-ACK or a Disconnect-NAK, depending on the status of the disconnection procedure.

Use of other signaling methods may be possible. However the solution proposed above, even if somewhat convoluted, it is a complete circle and it appears as a clean solution. In addition it allows avoiding major impacts on the existing implementations.

The invention is applicable to ASN and CSN in case of CIMv6 support; in particular, depending on the signaling method used, ASN-GW, HA and AAA could need to implement the invention.
- AAA: Authentication, Authorization and Accounting
- Acct: Accounting
- ACK: ACKnowledge
- ASN: Access Service Network
- ASN-GW: Access Service Network Gateway
- BA: Binding Acknowledgement
- BU: Binding Update
- CMIPv6: Client Mobile IP version 6
- CSN: Connectivity Service Network
- DPF: Data Path Function
- GW: GateWay
- HA: Home Agent
- ID: IDentifier
- IPv6: Internet Protocol version 6
- MS: Mobile Station
- NACK: Not ACK
- RADIUS: Remote Access Dial-In User Service
- WiMAX: Worldwide Interoperability for Microwave Access

### References

[1] WIMAX End-to-End Network Systems Architecture - Stage 2: Architecture Tenets, Reference Model and Reference Points - release 1.0.0 - March 28, 2007
[2] WIMAX End-to-End Network Systems Architecture - Stage 3: Architecture Tenets, Reference Model and Reference Points - release 1.0.0 - March 28, 2007

## Claims

1. A method to allow a network to become aware of the status of a procedure, making use of a newly defined signaling mechanism.
